# EUROPÄISCHE PATENTSCHRIFT

(11) **EP 2 648 974 B1**
(45) Veröffentlichungstag und Bekanntmachung des Hinweises auf die Patenterteilung: **27.04.2016**
(21) Anmeldenummer: 11794046.0
(22) Anmeldetag: 06.12.2011
(51) Int. Cl.: B64D 11/04

(54) **VORRICHTUNG ZUM KONTAMINATIONSFREIEN DRAINIEREN VON FRISCHWASSER IN EINEM FLUGZEUG**
APPARATUS FOR THE CONTAMINATION-FREE DRAINAGE OF CLEAN WATER IN AN AIRCRAFT
DISPOSITIF DE PURGE D'EAU FRAÎCHE EXEMPTE DE CONTAMINATION DANS UN AVION

(30) Priorität: 09.12.2010 DE 102010053982
(43) Veröffentlichungstag der Anmeldung: 16.10.2013
(73) Patentinhaber: Lufthansa Technik AG, 22335 Hamburg (DE)
(72) Erfinder: MAIER-WITT, Joachim, 22605 Hamburg (DE); MAINUSCH, Sebastian, 22527 Hamburg (DE)
(74) Vertreter: Müller Verweyen
(86) Internationale Anmeldenummer: PCT/EP2011/006104
(87) Internationale Veröffentlichungsnummer: WO 2012/076153

(56) Entgegenhaltungen:
- EP-A2- 2 096 032
- CN-U- 201 474 013
- DE-A1- 4 202 719
- DE-A1- 10 349 158
- DE-U1- 29 516 718
- JP-A- 54 160 041

## Beschreibung

Die Erfindung betrifft eine Vorrichtung zum kontaminationsfreien Drainieren von Frischwasser in einem Flugzeug mit den Merkmalen des Oberbegriffs von Anspruch 1.

In Verkehrsflugzeugen wird Frisch- bzw. Trinkwasser in einem oder mehreren Trinkwassertanks mitgeführt und steht über ein Leitungssystem an definierten Zapfstellen, beispielsweise an Wasserhähnen, den Passagieren oder der Besatzung des Flugzeugs zur Verfügung.

Generell ist es vorteilhaft, wenn der Frischwassertank gezielt geleert werden kann. Eine bekannte Methode, eine solche Drainage von Frischwasser durchzuführen, ist ein offener Wasserstrahl zwischen einem Frischwasserauslass und einem Abwasser-Einlasstrichter, durch den das Frischwasser in das bordeigene Abwassersystem geleitet werden kann. Der freie Wasserstrahl wird dabei eingesetzt, um eine Rückkontamination von dem Abwassersystem in das Frischwassersystem zu vermeiden. Problematisch dabei ist, dass so keine Sicherheit gegen Überlauf gewährleistet ist und so das Flugzeug bei einer Frischwasserdrainage während des Fluges unter Umständen gefährdet ist, weshalb eine solche Drainage nicht für die Anwendung im Flug geeignet ist.

Eine alternative Drainagemöglichkeit ist das Verlegen von Trinkwasser-Drainageleitungen zu den vorhandenen Drainageöffnungen im Flugzeugrumpf, auch "Drain Ports" genannt. Dies kann jedoch mit größerem Bauaufwand verbunden sein und ist nicht für eine Drainage großer Wassermengen geeignet. Darüber hinaus ist eine solche Drainage nicht im Flug anwendbar, da das Wasser im Flug unkontrolliert am Rumpf entlanglaufen und gefrieren könnte. Eis könnte sich lösen und Flugzeugteile, z.B. Flügelvorderkanten beschädigen.

Als dritte Möglichkeit kann ein außenbordseitiger, zusätzlicher Frischwasserablassstutzen (Drain Mast) inklusive Zuleitung und geregeltem Motorventil vorgesehen werden. Diese Drain Masts sind beheizt und leiten das Abwasser in den Luftstrom unterhalb des Flugzeugrumpfs, wo es verdampft / verdunstet. So kann eine Drainage großer Wassermengen auch im Flug erfolgen, diese Methode ist jedoch mit hohem Aufwand und hohen Kosten verbunden. Darüber hinaus kann ein zusätzlicher Drain Mast die Aerodynamik des Flugzeugs verschlechtern, was in erhöhtem Kraftstoffverbrauch resultieren kann.

CN 201 474 013 U offenbart eine Überlaufvorrichtung in einer Leitung zwischen einem Abwasseranschluss eines Handwaschbeckens und einem Zulauf eines Wassertanks für eine Toilettenspülung.

JP 54 160041 A offenbart einen Wassertank mit einem Drainage-Zulauf, einem Ablauf, einem Überlauf und einem Frischwasser-Zulauf, in dem ein mittels Schwimmer gesteuertes Ventil angeordnet ist.

Der Erfindung liegt dementsprechend die Aufgabe zugrunde, eine Vorrichtung zum kontaminationsfreien Drainieren von Frischwasser in einem Flugzeug bereitzustellen, welche besonders einfach und kostengünstig ist.

Die Erfindung löst die Aufgabe durch eine Vorrichtung mit den Merkmalen des Anspruchs 1. Weitere bevorzugte Ausgestaltungen der Erfindung sind den Unteransprüchen und der zugehörigen Beschreibung und den Zeichnungen zu entnehmen.

Zur Lösung der Aufgabe wird eine Vorrichtung zum kontaminationsfreien Drainieren von Frischwasser in einem Flugzeug mit den Merkmalen des Anspruchs 1 vorgeschlagen.

Durch die erfindungsgemäße Vorrichtung wird der Wasserübertritt von dem Frischwasserauslass hin zur Einlassöffnung in ein geschlossenes Gehäuse verlegt, wodurch der Frischwasserauslass von äußeren Einflüssen (Schmutz, Luft, die u.U. Bakterien enthalten kann) besser abgeschirmt wird und so der Schutz vor Kontamination des Frischwassersystems erhöht wird. Zusätzlich wird insbesondere durch den Überlauf sichergestellt, dass sich nicht so viel Wasser im Gehäuse ansammeln kann, dass es zu einer Rückkontamination des Frischwassersystems kommt. Durch die an den Überlauf angeschlossene Überlaufleitung kann überlaufendes Wasser in einen ungefährdeten Bereich des Flugzeugs abgeführt werden und so bewirkt werden, dass es zu keinem keimübertragenden, gleichzeitigen Kontakt des Wassers mit dem Frischwasserauslass und der Einlassöffnung kommen kann. Durch die erfindungsgemäße Vorrichtung kann das flugzeugseitig vorhandene Abwassersystem in besonders einfacher und kostengünstiger Weise zur kontaminationsfreien Drainage von Frischwasser genutzt werden und gleichzeitig wird ein unkontrolliertes Überlaufen vermieden.

Vorzugsweise ist die Vorrichtung frei von Elektrik, Elektronik und/oder mechanischen Elementen. Auf diese Weise ist die Vorrichtung weniger anfällig gegenüber etwaigen Störungen. Die Drainage des Frischwassers erfolgt somit bevorzugt nur durch die im Gehäuse angeordnete Einlassöffnung und den Überlauf.

Vorteilhaft ist es dabei, wenn die Einlassöffnung als Trichter ausgeführt ist. Eine als Trichter ausgeführte Einlassöffnung ist auch im Hinblick auf den später beschriebenen Trocknungseffekt vorteilhaft.

Vorzugsweise ist der Frischwasserauslass an dem Deckel des Gehäuses angeordnet oder Teil des Deckels. Durch das Integrieren des Frischwasserauslasses in den Deckel des Gehäuses ist die erfindungsgemäße Vorrichtung kompakt und bauraumsparend. Verstärkt wird dieser Effekt, wenn die Einlassöffnung bevorzugt an dem Boden des Gehäuses angeordnet ist oder Teil des Bodens ist und die Vorrichtung so noch kompakter ausgelegt werden kann. Dabei ist es vorteilhaft, wenn zwischen dem Frischwasserauslass und der Einlassöffnung ein Abstand vorgesehen wird, da so gewährleistet werden kann, dass bei einem Volllaufen der Einlassöffnung keine Rückkontamination stattfinden kann.

Vorzugsweise sind die Mittelachsen der Einlassöffnung und des Frischwasserauslasses konzentrisch. Durch diese Anordnung, bei der der Frischwasserauslass direkt über der Einlassöffnung vorgesehen ist, kann eine Drainage gut erfolgen, da wenig Spritzwasser an der Einlassöffnung vorbei in den Überlauf gelangt. Verstärkt wird dieser Effekt, wenn der mittlere Durchmesser D_{E} der Einlassöffnung an der dem Frischwasserauslass zugewandten Seite, vorzugsweise mindestens halb so groß, weiter bevorzugt größer als 75% der Größe des Außendurchmessers D_{G} des Gehäuses ist, da so nahezu alles Wasser, welches aus dem Frischwasserauslass austritt, auch von der Einlassöffnung aufgefangen und abgeleitet wird.

Vorzugsweise ist der Überlauf am Boden des Gehäuses angeordnet oder Teil des Bodens. Ein Anordnen des Überlaufs am Boden des Gehäuses oder als Teil des Bodens ist vorteilhaft, da sich so im Bodenbereich kein Wasser ansammeln kann, sondern das Wasser direkt in die Überlaufleitung abgeleitet wird. Darüber hinaus kann über die Überlaufleitung, sofern kein Frischwasser drainiert wird, Luft aus dem Boden des Gehäuses in das Gehäuse hinein strömen und von dort durch die Leitung ins Abwassersystem und vom Abwassersystem zum außenbordseitig angebrachten Abwasser-Ablassstutzen (Drain Mast) weiterströmen. Der Luftstrom geht dabei aufgrund der Druckdifferenz zwischen Kabine und Umgebung im Flug stets nur in die beschriebene Richtung und trocknet dabei den Boden des Gehäuses und weitere Gehäusewände und insbesondere die Einlassöffnung innenseitig aus. Dieser Trocknungsseffekt wirkt einer Biofilm-Bildung im Gehäuse und insbesondere auf der Einlassöffnung entgegen, da die Biofilm bildenden Bakterien sich ohne Wasser nicht oder nur sehr begrenzt an der Oberfläche festsetzen bzw. vermehren können.

Vorzugsweise ist im Gehäuse mindestens eine Lüftungsbohrung vorgesehen. Lüftungsbohrungen können den weiter oben beschriebenen Trocknungseffekt verstärken und darüber hinaus den Luftstrom derart vorteilhaft beeinflussen, dass Bereiche des Gehäuses und/oder der Einlassöffnung überströmt werden, die sonst nur begrenzt von Luft überströmt werden. Dies wirkt einer Biofilm-Bildung zusätzlich entgegen, welches in Anbetracht des beträchtlichen Schadens, der durch Biofilme verursacht werden kann, besonders vorteilhaft ist.

Erfindungsgemäß weist die Frischwasserzuleitung ein Ventil auf, welches zum Drainieren geöffnet werden muss. Eine Frischwasserzuleitung mit Ventil ist - wie später noch ausführlich beschrieben - besonders gut dazu geeignet Frischwasserdrainage durchzuführen, wenn sich das Flugzeug am Boden befindet.

Erfindungsgemäß ist die an den Überlauf angeschlossene Überlaufleitung mit einer Vorrichtung zum Detektieren von Wasser ausgerüstet, welche so ausgelegt ist, dass sie automatisch bei überlaufendem Wasser ein Signal an das Ventil aussendet, woraufhin das Ventil schließt und die Frischwasserdrainage verringert oder vollständig unterbunden wird. Durch das Implementieren einer solchen Vorrichtung zum Detektieren von Wasser kann vermieden werden, dass ungewollt viel Wasser überläuft.

Vorzugsweise ist eine Wasserstandsmesseinrichtung an der Einlassöffnung angeordnet, welche abhängig vom Wasserstand in der Einlassöffnung ein Signal an das Ventil sendet, wodurch die Durchflussmenge des Frischwassers vom Ventil reduziert wird. Durch eine solche Wasserstandsmesseinrichtung, die beispielsweise als Schwimmer ausgeführt sein kann, kann schon, bevor es zu einem Überlauf von Wasser kommt, die Drainage verlangsamt bzw. gestoppt werden und so ein zu hoher Wasserstand und/oder ein Überlaufen vermieden werden. Bevorzugter Weise wird die Frischwasserdrainage somit durch die Wasserstandsmesseinrichtung reguliert, was insbesondere zur Drainage von großen Wassermengen im Flug geeignet ist.

Weiterhin ist es bevorzugt, dass eine Überlauföffnung, durch die Wasser in den Überlauf strömen kann, unterhalb der (bevorzugt trichterförmigen) Einlassöffnung angeordnet ist. Vorzugsweise ist die Öffnung des Überlaufs im Boden des Gehäuses angeordnet, so dass jegliches überlaufendes Wasser aus der Einlassöffnung in den Überlauf abfließen kann, ohne dass sich im Boden des Gehäuses Wasser ansammelt.

Die Erfindung wird im Folgenden anhand vorteilhafter Ausführungsformen unter Bezugnahme auf die beigefügten Figuren erläutert. Dabei zeigen die Figuren im Einzelnen:
- Fig. 1:: Waschraum eines Verkehrsflugzeugs mit Frischwasserdrainage nach dem Stand der Technik
- Fig. 2:: Schnittdarstellüng einer erfindungsgemäßen Vorrichtung zum kontaminationsfreien Drainieren von Frischwasser für ein Flugzeug
- Fig. 3:: Darstellung eines Einbauplans einer erfindungsgemäßen Vorrichtung mit zusätzlichem Ventil und einer Vorrichtung zum Detektieren von Wasser

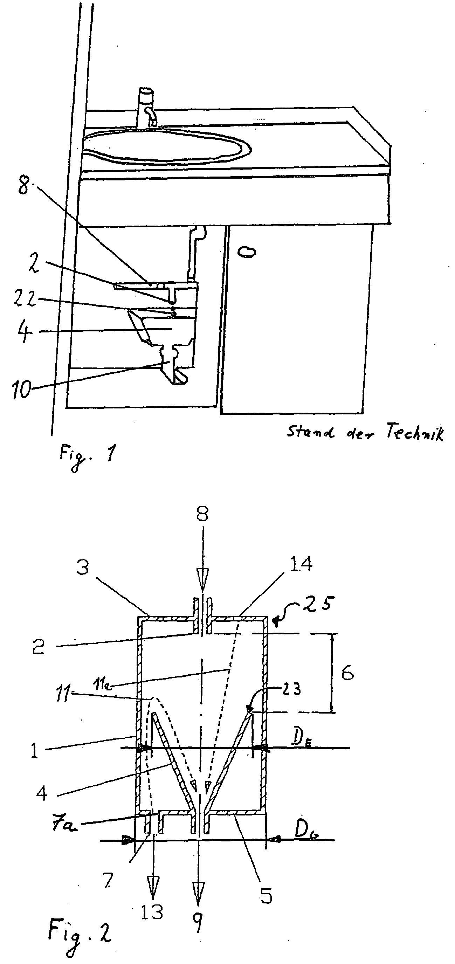

In der Figur 1 ist ein Waschraum eines Verkehrsflugzeugs dargestellt, in dem nach bekannter Methode eine Frischwasserdrainage stattfindet. Dabei wird ein offener Wasserstrahl 22 zwischen einem Frischwasserauslass 2 einer Frischwasserzuleitung 8 und einer Einlassöffnung 4 einer Abwasserleitung 10 genutzt. Durch den offenen Wasserstrahl 22 soll eine Rückkontamination des Frischwasserauslasses 2 bzw. der Frischwasserzuleitung 8 vermieden werden.

Problematisch bei einer solchen Drainage nach dem Stand der Technik ist, dass keine Sicherheit gegen Überlauf gewährleistet ist und so das Flugzeug bei einer Frischwasserdrainage während des Fluges unter Umständen gefährdet sein könnte, weshalb eine derartige Frischwasserdrainage nicht für die Anwendung im Flug geeignet ist.

In der Figur 2 ist eine Schnittdarstellung einer erfindungsgemäßen Vorrichtung zum kontaminationsfreien Drainieren von Frischwasser für ein Flugzeug dargestellt. Bei einer solchen Drainageeinheit 25 mündet eine Frischwasserzuleitung 8 in einen Frischwasserauslass 2, der vorzugsweise im Deckel 3 eines vorzugsweise zylindrischen Gehäuses 1 angeordnet ist. Bevorzugt am Boden 5 oder als Teil des Bodens 5 ist in dem Gehäuse 1 auch eine Einlassöffnung 4 angeordnet, die hier in ihrer bevorzugten Ausführungsform als Trichter gestaltet ist und sich ausgehend vom Boden 5 bis in die Gehäusemitte erstreckt. Dabei nimmt der mittlere Durchmesser D_{E} der Einlassöffnung 4 vom Boden 5 bis zu seiner dem Frischwasserauslass zugeordneten Stirnseite 23 stetig zu. Der Abstand 6 zwischen dem Frischwasserauslass 2 und der Stirnseite 23 der Einlassöffnung 4 ist dabei vorzugsweise immer positiv, d.h. der Frischwasserauslass 2 befindet sich nicht innerhalb des Trichters, sondern ist in einem Abstand 6 davon entfernt angeordnet, so dass bei einem Volllaufen des Trichters kein Wasser in Kontakt mit dem Frischwasserauslass 2 kommen kann. Demnach ist die Vorrichtung vorzugsweise so eingerichtet, dass eine freie Wegstrecke von dem Frischwasser zurückgelegt wird. Durch die freie Wegstrecke und den Überlauf 7 kann einer Rückkontamination entgegengewirkt werden.

Um bei einem Überlaufen des Trichters das Wasser abführen zu können, ist bevorzugt als Teil des Bodens 5 oder im Boden 5 des Gehäuses 1 ein Überlauf 7 angeordnet, der Wasser über eine angeschlossene Überlaufleitung 13 abführen kann. Wie in der Figur 2 dargestellt, ist die Überlauföffnung 7a des Überlaufs 7 unterhalb der Einlassöffnung 4 der Leitung 9 angeordnet.

Von dem Trichter wird das drainierte Wasser in eine Leitung 9 eingeleitet, die mit dem Abwassersystem des Flugzeugs verbunden ist.

Der Trichter ist - wie in der Figur 2 dargestellt - vorzugsweise innerhalb des Gehäuses 1 angeordnet, und wird somit bevorzugt vollkommen von dem Gehäuse 1 umschlossen.

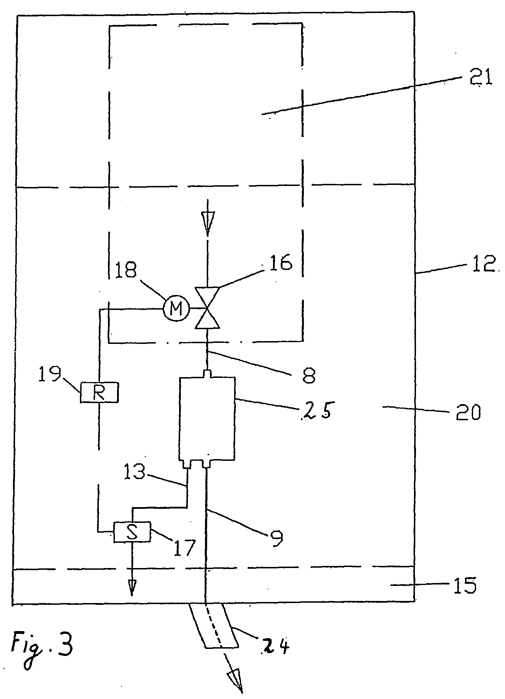

Wenn keine Frischwasserdrainage erfolgt, kann insbesondere während des Fluges ein Luftstrom 11 durch die Überlaufleitung 13 bzw. den Überlauf 7 in das Gehäuse 1 hineinströmen und von dort weiter durch die Einlassöffnung 4 in die Leitung 9. Durch die Leitung 9 strömt die Luft weiter über das Abwassersystem des Flugzeugs bis zu den außenbordseitig angebrachten Abwasser-Ablassstutzen 24, da in der Umgebung des Flugzeugs aufgrund der Flughöhe ein deutlich niedrigerer Druck als im Innenraum der Flugzeugkabine vorherrscht (siehe Figur 3). Durch den Luftstrom 11 werden die Überlaufleitung 13, der Überlauf 7, der Innenraum des Gehäuses 1 und insbesondere die Einlassöffnung 4 sowie alle anderen überströmten Flächen getrocknet. Dieser Trocknungseffekt wirkt einer Biofilm-Bildung entgegen, da die Biofilm bildenden Bakterien sich ohne Wasser nicht oder nur sehr begrenzt an der Oberfläche festsetzen bzw. vermehren können.

Dieser Trocknungseffekt kann durch im Gehäuse 1 vorgesehene, vorzugsweise im Deckel 3 des Gehäuses 1 und besonders bevorzugt auf der dem Überlauf 7 gegenüberliegenden Seite angeordnete, Lüftungsbohrungen 14 bzw. eine einzelne Lüftungsbohrung 14 verstärkt werden. Durch eine Lüftungsbohrung 14 im Deckel 3, die dem im Boden 5 vorgesehenen Überlauf 7 möglichst diametral gegenüberliegt, kann ein zusätzlicher Luftstrom 11a gezielt so erzeugt werden, der auch Bereiche im Gehäuse 1 überströmt, die vom ersten Luftstrom 11 nur eingeschränkt überströmt werden. Ein Anordnen des Überlaufs 7 im Boden 5 hat den Vorteil, dass dieser durch den Luftstrom 11 besonders gut getrocknet wird.

Damit besonders viel Frischwasser von dem Frischwasserauslass 2 in die Einlassöffnung 4 fließt, ist der mittlere Durchmesser D_{E} vorzugsweise mindestens halb so groß und besonders bevorzugt größer als 75% der Größe des Außendurchmessers D_{G} des Gehäuses 1.

Unterhalb des Unterflurbereichs 20 befindet sich der Rumpfbereich 15, auch Bilge genannt, des Flugzeugs, in den bevorzugt das Wasser aus der Überlaufleitung 13 abgeleitet wird. Unterhalb des Rumpfbereichs 15 ist der Abwasser-Ablassstutzen 24, der sog. Drain Mast, des Flugzeugs angeordnet, in den das Frischwasser aus der Frischwasserleitung 8 über die Drainageeinheit 25 und die Leitung 9 geleitet wird. Auch der Luftstrom 11 verlässt das Flugzeug über diesen Abwasser-Ablassstutzen 24.

Alternativ kann die Überlaufleitung 13 auch wieder in die Leitung 9 geführt werden, anstatt in die Bilge abgeleitet zu werden.

Die Drainageeinheit 25 wird, wie in der Figur 3 dargestellt, bevorzugt im Unterflurbereich 20 eines Verkehrsflugzeugs montiert. Diese vorteilhafte Anordnung ermöglicht ein einfaches Drainieren, da bei manchen Flugzeugen das Frischwassersystem 21 bzw. die Frischwasserleitungen im Deckenbereich der Flugzeugkabine 12 positioniert sind. Dies ist beispielsweise bei den Flugzeugtypen Boeing 737 - (BBJ) und der B777 der Fall. Das Wasser kann hier aus konstruktiven Gründen nicht direkt von dem Frischwassersystem 21 im Deckenbereich zum Wasserhahn geleitet werden, insbesondere da es noch einen Durchlauferhitzer passieren muss, der sich ebenfalls unterhalb des Wasserhahns befindet. Dies bedeutet, dass nach dem Öffnen des Wasserhahns immer Restwasser in der Frischwasserzuleitung 8 stehen bleibt, die sich - aus den genannten konstruktiven Gründen - unterhalb des Wasserhahns befindet. Diese Frischwasserzuleitung 8 wird in der B737 und 777 bei einer Drainage über die eingangs beschriebenen Drain Ports geleert, um eine Kontamination des stehenden Wassers zu vermeiden. Dafür ist allerdings einerseits ein Drain Port notwendig, welcher zusätzlich auch mittels Leitungen verbunden sein muss. Beim Einsatz der erfindungsgemäßen Vorrichtung ist hingegen nur eine Verbindung zum Abwassersystem nötig und darüber hinaus kann eine Drainage von Trinkwasser auch im Flug ohne den Anbau zusätzlicher Drain Masts erfolgen.

Trinkwasserdrainagen im Flug werden durchgeführt, um überflüssiges Trinkwasser abzulassen, welches etwa bei Nachtflügen sinnvoll sein kann, da hier erfahrungsgemäß weniger Wasser benötigt wird und damit Gewicht und damit der Treibstoffverbrauch reduziert werden kann. Außerdem kann eine Trinkwasserdrainage auch kurz vor der Landung erfolgen, um eine Trinkwasserdrainage am Boden zu vermeiden, denn diese ist insbesondere in kalten Gegenden ein Problem, weil das Wasser während der Drainage schnell gefriert, sofern das Flugzeug nicht beheizt wird, was wiederum aufwendig ist und ebenfalls Treibstoff kostet.

Erfindungsgemäß ist vorzugsweise in der Überlaufleitung 13 eine Vorrichtung zum Detektieren von Wasser 17 angeordnet. Darüber hinaus ist in der Frischwasserleitung 8 ein Ventil 16 angeordnet, welches vorzugsweise durch einen Motor 18 angetrieben werden kann. Die Vorrichtung zum Detektieren von Wasser 17 ist vorzugsweise über ein Relais 19 mit dem Motor 18 des Ventils 16 verbunden. Das motorbetriebene Ventil 16 wird vorzugsweise automatisch geschlossen, sobald der Vorrichtung zum Detektieren von Wasser 17, die bevorzugt als Wassersensor ausgeführt ist, Wasser detektiert und über das Relais 19 ein Signal an den Motor 18 leitet. Die erfindungsgemäße Vorrichtung kann auch so eingerichtet sein, dass das Ventil 16 nicht völlig schließt, sondern nur die Durchflussmenge des Wassers verringert wird. Ferner kann die Frischwasserleitung 8 auch mit einem querschnittreduzierenden Element ausgestattet werden, um die in das Gehäuse 1 einströmende Wassermenge zu begrenzen.

Zusätzlich oder alternativ zu der Vorrichtung zum Detektieren von Wasser in der Überlaufleitung kann auch eine Wasserstandsmesseinrichtung an der Einlassöffnung 4 angeordnet sein, welche abhängig vom Wasserstand in der Einlassöffnung 4 ein Signal an das Ventil 16 bzw. an den Motor 18 des Ventils sendet, wodurch die Durchflussmenge des Frischwassers reduziert wird. Die Wasserstandsmesseinrichtung ist vorzugsweise als Schwimmer ausgebildet und sendet das Signal zum Reduzieren der Durchflussmenge bei einem vorbestimmten Wasserstand. Somit kann die Frischwasserdrainage frühzeitig gestoppt werden, bevor es zu einem Überlaufen kommt.

Die Vorrichtung zum Detektieren von Wasser 17 und die Wasserstandsmesseinrichtung eignen sich insbesondere zur Drainage großer Wassermengen im Flug, da durch sie eine Überlauf-Festigkeit der Drainage erreicht werden kann.

Die Frischwasserleitung 8 und/oder die Leitung 9, sowie die Drainageeinheit 25 werden vorzugsweise isoliert und/oder elektrisch beheizt, um die Gefahr des Einfrierens auszuschließen.

Die erfindungsgemäße Vorrichtung zum kontaminationsfreien Drainieren von Frischwasser ermöglicht so besonders einfach und kostengünstig eine Frischwasserdrainage am Boden und in der Luft durchzuführen, da das Frischwasser in das bordeigene Abwassersystem eingeleitet werden kann und keine umständlichen Maßnahmen, wie die Installation eines zusätzlichen Drain Masts erfolgen muss.

### Bezugszeichenliste:

- 1: Gehäuse
- 2: Frischwasserauslass
- 3: Deckel
- 4: Einlassöffnung
- 5: Boden
- 6: Abstand
- 7: Überlauf
- 7a: Überlauföffnung
- 8: Frischwasserzuleitung
- 9: Leitung
- 10: Abwasserleitung
- 11(a): Luftstrom
- 12: Flugzeugkabine
- 13: Überlaufleitung
- 14: Lüftungsbohrung
- 15: Rumpfbereich
- 16: Ventil
- 17: Vorrichtung zum Detektieren von Wasser
- 18: Motor
- 19: Relais
- 20: Unterflurbereich
- 21: Frischwassersystem
- 22: offener Wasserstrahl
- 23: Stirnseite
- 24: Abwasser-Ablassstutzen
- 25: Drainageeinheit

## Patentansprüche

1. Vorrichtung zum kontaminationsfreien Drainieren von Frischwasser in einem Flugzeug, wobei die Vorrichtung eine Frischwasserzuleitung (8) mit einem Frischwasserauslass (2) aufweist, aus dem beim Drainieren Wasser austritt, sowie eine davon strömungsabwärts angeordnete Einlassöffnung (4) einer Leitung (9), wobei die Einlassöffnung zur Aufnahme des Drainagewassers vorgesehen ist und die Leitung (9) mit dem Abwassersystem des Flugzeuges verbindbar ist, wobei der Frischwasserauslass (2) und die Einlassöffnung (4) in einem Gehäuse (1) angeordnet sind, welches einen Überlauf (7) aufweist, wobei die Frischwasserzuleitung (8) ein Ventil (16) aufweist, welches zum Drainieren geöffnet werden muss, **dadurch gekennzeichnet, dass** die an den Überlauf (7) angeschlossene Überlaufleitung (13) mit einer Vorrichtung zum Detektieren von Wasser (17) ausgerüstet ist, welche so ausgelegt ist, dass sie automatisch bei überlaufendem Wasser ein Signal an das Ventil (16) aussendet, wodurch die Frischwasserdrainage verringert oder vollständig unterbunden wird.

2. Vorrichtung nach Anspruch 1, **dadurch gekennzeichnet, dass** die Einlassöffnung (4) als Trichter ausgeführt ist.

3. Vorrichtung nach Anspruch 1 oder 2, **dadurch gekennzeichnet, dass** der Frischwasserauslass (2) an dem Deckel (3) des Gehäuses (1) angeordnet ist oder Teil des Deckels (3) ist.

4. Vorrichtung nach einem der vorangegangenen Ansprüche, **dadurch gekennzeichnet, dass** die Einlassöffnung (4) an dem Boden (5) des Gehäuses (1) angeordnet ist oder Teil des Bodens (5) ist.

5. Vorrichtung nach einem der vorangegangenen Ansprüche, **dadurch gekennzeichnet, dass** die Mittelachsen der Einlassöffnung (4) und des Frischwasserauslasses konzentrisch sind.

6. Vorrichtung nach einem der vorangegangenen Ansprüche, **dadurch gekennzeichnet, dass** der mittlere Durchmesser D_{E} der Einlassöffnung (4) an der dem Frischwasserauslass (2) zugewandten Stirnseite (23) mindestens halb so groß, weiter bevorzugt größer als 75% der Größe des Außendurchmessers D_{G} des Gehäuses (1).

7. Vorrichtung nach einem der vorangegangenen Ansprüche, **dadurch gekennzeichnet, dass** der Überlauf (7) am Boden (5) des Gehäuses (1) angeordnet ist oder Teil des Bodens (5) ist.

8. Vorrichtung nach einem der vorangegangenen Ansprüche, **dadurch gekennzeichnet, dass** im Gehäuse (1) mindestens eine Lüftungsbohrung (14) vorgesehen ist.

9. Vorrichtung nach Anspruch 1, **dadurch gekennzeichnet, dass** eine Wasserstandsmesseinrichtung an der Einlassöffnung angeordnet ist, welche abhängig vom Wasserstand in der Einlassöffnung (4) ein Signal an das Ventil (16) sendet, wodurch die Durchflussmenge des Frischwassers reduziert wird.

10. Vorrichtung nach einem der vorangegangen Ansprüche, **dadurch gekennzeichnet, dass** eine Überlauföffnung (7a), durch die das Wasser in den Überlauf (7) strömen kann, unterhalb der Einlassöffnung (4) angeordnet ist.

## Claims

1. Apparatus for the contamination-free drainage of fresh water in an aircraft, the apparatus having a fresh water supply line (8) with a fresh water outlet (2) from which water issues during drainage, and disposed downstream thereof an inlet opening (4) of a line (9), the inlet opening being provided for receiving drainage water and the line (9) being connectable to the waste water system of the aircraft, wherein the fresh water outlet (2) and the inlet opening (4) are disposed in a housing (1) which has an overflow (7), wherein the fresh water supply line (8) has a valve (16) which must be opened for draining, **characterized in that** the overflow line (13) attached to the overflow (7) is equipped with a device for detecting water (17) which is so configured that it automatically sends a signal to the valve (16) in the event of water overflowing, whereby the drainage of fresh water is reduced or completely stopped.

2. Apparatus according to claim 1, **characterized in that** the inlet opening (4) is in the form of a funnel.

3. Apparatus according to claim 1 or 2, **characterized in that** the fresh water outlet (2) is disposed at the lid (3) of the housing (1) or is part of the lid (3).

4. Apparatus according to any one of the preceding claims, **characterized in that** the inlet opening (4) is disposed at the base (5) of the housing (1) or is part of the base (5).

5. Apparatus according to any one of the preceding claims, **characterized in that** the central axes of the inlet opening (4) and of the fresh water outlet are concentric.

6. Apparatus according to any one of the preceding claims, **characterized in that** the central diameter D_{E} of the inlet opening (4) at the end (23) towards the fresh water outlet (2) is at least half the size of, more preferably greater than 75% of the size of the outside diameter D_{G} of the housing (1).

7. Apparatus according to any one of the preceding claims, **characterized in that** the overflow (7) is disposed at the base (5) of the housing (1) or is part of the base (5).

8. Apparatus according to any one of the preceding claims, **characterized in that** at least one ventilation bore (14) is provided in the housing (1).

9. Apparatus according to claim 1, **characterized in that** a water level measuring device is disposed at the inlet opening, which sends a signal to the valve (16) in dependence on the water level in the inlet opening (4), whereby the rate of flow of the fresh water is reduced.

10. Apparatus according to any one of the preceding claims, **characterized in that** an overflow opening (7a), through which the water is able to flow into the overflow (7), is disposed beneath the inlet opening (4).

## Revendications

1. Dispositif de drainage exempte de contamination d'eau douce dans un avion, le dispositif comportant une amenée d'eau douce (8) dotée d'une sortie d'eau douce (2) par laquelle sort l'eau lors du drainage, ainsi qu'un orifice d'entrée (4) d'un conduit (9) disposé en aval de celle-ci, l'orifice d'entrée étant prévu pour recevoir l'eau de drainage et le conduit (9) pouvant être relié au système d'évacuation d'eaux usées de l'avion, la sortie d'eau douce (2) et l'orifice d'entrée (4) étant disposés dans un boîtier (1) qui présente un trop-plein (7), l'amenée d'eau douce (8) présentant une valve (16) qui doit être ouverte pour le drainage, **caractérisé en ce que** le conduit de trop-plein (13) relié au trop-plein (7) est équipé d'un dispositif de détection d'eau (17), conçu de telle sorte qu'il envoie automatiquement un signal à la valve (16) en cas de débordement d'eau, moyennant quoi le drainage d'eau douce est réduite ou complètement interrompue.

2. Dispositif selon la revendication 1, **caractérisé en ce que** l'orifice d'entrée (4) est réalisé sous forme d'entonnoir.

3. Dispositif selon la revendication 1 ou 2, **caractérisé en ce que** la sortie d'eau douce (2) est disposée au niveau du couvercle (3) du boîtier (1) ou fait partie du couvercle (3).

4. Dispositif selon l'une quelconque des revendications précédentes, **caractérisé en ce que** l'orifice d'entrée (4) est disposé au niveau du fond (5) du boîtier (1) ou fait partie du fond (5).

5. Dispositif selon l'une quelconque des revendications précédentes, **caractérisé en ce que** les axes médians de l'orifice d'entrée (4) et de la sortie d'eau douce sont concentriques.

6. Dispositif selon l'une quelconque des revendications précédentes, **caractérisé en ce que** le diamètre central DE de l'orifice d'entrée (4) au niveau de la face frontale (23) en regard de la sortie d'eau douce (2) s'élève au moins à la moitié, plus préférentiellement à plus de 75 %, de la taille du diamètre extérieur D_{G} du boîtier (1).

7. Dispositif selon l'une quelconque des revendications précédentes, **caractérisé en ce que** le trop-plein (7) est disposé au niveau du fond (5) du boîtier (1) ou fait partie du fond (5).

8. Dispositif selon l'une quelconque des revendications précédentes, **caractérisé en ce qu'**au moins un perçage d'aération (14) est prévu dans le boîtier (1).

9. Dispositif selon la revendication 1, **caractérisé en ce qu'**un moyen de mesure du niveau d'eau est disposé au niveau de 1 l'orifice d'entrée, qui envoie un signal à la valve (16) en fonction du niveau d'eau dans l'orifice d'entrée (4), moyennant quoi le débit de l'eau douce est réduit.

10. Dispositif selon l'une quelconque des revendications précédentes, **caractérisé en ce qu'**un orifice de trop-plein (7a) à travers laquelle l'eau peut s'écouler dans le trop-plein (7) est disposé sous l'orifice d'entrée (4).
